(19) Europäisches Patentamt
European Patent Office
Office européen des brevets

(11) Publication number: **0 125 020**
**A1**

# (12) EUROPEAN PATENT APPLICATION

(21) Application number: 84302340.9

(22) Date of filing: 05.04.84

(51) Int. Cl.³: C 08 L 23/06
H 01 B 3/44, C 08 K 5/54

(30) Priority: 08.04.83 US 483357

(43) Date of publication of application:
14.11.84 Bulletin 84/46

(84) Designated Contracting States:
DE FR GB IT SE

(71) Applicant: DOW CORNING CORPORATION
3901 S. Saginaw Road
Midland Michigan 48640(US)

(72) Inventor: Vincent, Gary Allen
3121 Bullock Creek Road
Midland Michigan(US)

(74) Representative: Laredo, Jack Joseph et al,
Elkington and Fife High Holborn House 52/54 High Holborn
London, WC1V 6SH(GB)

## (54) Anti-treeing additives.

(57) A composition comprising a major portion of a polyolefin and a minor portion of a siloxane having at least one silicon bonded unsaturated, substituted or unsubstituted, hydrocarbon radical substituent is disclosed. A method of stabilizing polymers against water and electrical treeing which comprises adding a siloxane as defined above is further disclosed.

EP 0 125 020 A1

# ANTI-TREEING ADDITIVES

This invention relates to a composition comprising a major portion of a polyolefin and a minor portion of a siloxane having at least one silicon bonded unsaturated, substituted or unsubstituted, hydrocarbon radical substituent.

This invention further relates to a method of stabilizing polymers against water and electrical treeing which comprises adding a siloxane having at least one silicon bonded unsaturated, substituted or unsubstituted, hydrocarbon radical substituent.

Polymeric compositions are well-known and are used extensively as insulation materials for wire and cable. As an insulator, it is important the composition have various physical and electrical properties, such as resistance to mechanical cut through, stress crack resistance, and dielectric failure. Recent publications have indicated water tree growth and electrical tree growth in the insulation are particularly important problems since they are associated with, though not necessarily totally responsible for, dielectric failure.

An important application for an insulating material is in high voltage transmission and distribution cable, especially in direct buried underground service. Unfortunately, the efficient use of polymeric compositions in high voltage cables is precluded by the degradation process called "treeing". Treeing is an electrical pre-breakdown process. The name is given to the damage, visually resembling trees, which results in a solid dielectric exposed to electrical stress. Treeing can occur and progress as a result of partial discharges.

without discharges in the presence of moisture, and with impulse, ac, or dc voltages.

It is generally believed two different types of trees exist. Trees which form in the presence of water, and in particular at low voltages, are called water or electrochemical trees. When water is absent, the trees which form are called electrical trees.

Although there are many theories concerning the initiation and growth of trees, there is virtual unanimity in the belief they start at an imperfection in the cable. This imperfection can be a small void or a piece of solid contamination.

Several organic additives have been discovered which are quite effective in retarding the growth of both types of trees. Acetophenone is perhaps one of the best known anti-treeing agents in existence. It is a product of the decomposition of dicumylperoxide which has found wide use as a curing agent to produce crosslinked polyethylene. The initial decreased treeing tendency of crosslinked polyethylene is a direct result of the existence of acetophenone in the former. Unfortunately, the effect is only temporary because the acetophenone diffuses out of the polyethylene with time; and the polymer's resistance to treeing becomes the same as uncrosslinked polyethylene.

The prevention of treeing has also been attempted by preparing super clean resin, the inclusion of fillers, and decreasing or eliminating the cable's exposure to steam during crosslinking.

Silicones have found limited use in the area of anti-treeing. Kato, et al. (U.S. Patent Number No. 3,956,420) discloses the use of a combination of ferrocene, an 8-substituted quinoline, and a silicone

liquid to increase the dielectric strength of polyethylene and its voltage endurance in water. Ashcraft, et al. (U.S. Patent Number No. 4,144,202) inhibits water treeing in ethylene polymer compositions by employing organosilanes containing an epoxy radical. Ashcraft, et al. (U.S. Patent Number No. 4,263,158) further discloses the use of organosilanes containing C=N bonds to inhibit water treeing in ethylene polymers. Ashcraft et al. (Canadian Patent Number No. 1,103,915) further discloses the use of organosilanes containing C=O bonds to inhibit water treeing in ethylene polymers.

German Offenlegungsschrift Number 2,737,430 and U.S. Patent Number 4,299,713 disclose the addition of alkoxysilanes to polyolefin insulation to prevent water tree formation. U.S. Patent Number 4,332,957 discloses the use of phenoxyalkoxy-substituted silanes as water tree and electrical tree retardant additives. British Patent Number 1,248,256, and British Patent Number 1,277,378 disclose treating mineral fillers with organosilanes and then adding them to the polymer to decrease the porosity of the composition. Japanese Patent Number Sho 50[1981]-92946 discloses the use of silicon grafted polyolefins in combination with propionates to inhibit water treeing. Japanese Patent Number Sho 56[1981]-109404 discloses the use of diorganopolysiloxanes having a viscosity range of 30 to 500 centistokes to inhibit water treeing. This patent further discloses siloxanes modified with alkoxy groups have little effect upon water treeing.

As is evidenced by the prior art, treeing can be inhibited in two different ways. If the voids in the plastic are filled, there is slight improvement in resistance to treeing. If voltage stabilizers, such as

acetophenone, are included in the polyethylene, the stabilizers are thought to trap and deactivate electrons, and thus inhibit treeing. Most, if not all, of the voltage stabilizers are mobile aromatic compounds. The mobility of the compound, however, can not be so great that it does not stay in the plastic. If it migrates to the surface, it evaporates, and its effectiveness is totally lost.

As evidenced by the data in the present application, it is theorized that the ideal composition should contain an additive which is mobile and sufficiently compatible (soluble) with the plastic so it can migrate to the voids and solid impurities which are the points of treeing initiation. By filling and surrounding these faults in the plastic, it retards the initiation of the trees; and by filling the tree channel as it is formed, it retards the growth of the trees. At the same time, the additive must be sufficiently nonvolatile to ensure it stays in the plastic and does not evaporate.

It is, thus, an object of this invention to provide a composition comprising a major portion of a polyolefin and a minor portion of a siloxane having at least one silicon bonded unsaturated, substituted or unsubstituted, hydrocarbon radical; the siloxane being mobile, nonvolatile, and somehwat compatible (soluble) with the plastic. It is a further object of this invention to provide a method of stabilizing polymers against water and electrical treeing by adding the siloxane as defined above.

This invention relates to a composition comprising a major portion of a polyolefin and a minor portion of a siloxane having at least one silicon bonded

unsaturated, substituted or unsubstituted, hydrocarbon radical substituent.

This invention further relates to a method of stabilizing polymers against water and electrical treeing which comprises adding a siloxane as defined above.

In general, the polymeric component of the present invention can be any solid synthetic organic polymeric thermoplastic resin. Polymers can be crosslinked by any of the well-known techniques such as chemical, radiation and grafting. Specific examples of suitable resins include polyolefins and copolymers thereof, vinyls, olefin-vinyl copolymers, olefin-allyl copolymers, polyamides, acrylics, polystyrenes, cellulosics, polyesters, and fluorocarbons.

The polyolefins include solid polymers of olefins, particularly mono-alpha-olefins, which comprise from two to six carbon atoms, e.g., polyethylene, polypropylene, polybutene, polyisobutylene, poly(4-methyl pentane), and the like. Copolymers of ethylene, and other compounds interpolymerizable with ethylene such as butene-1, pentene-1, styrene, and the like, may be employed. In general, the copolymer will be comprised of 50 percent by weight or more of ethylene.

Suitable examples of vinyl polymers include polyvinyl chloride, polyvinyl acetate, vinyl chloride/vinyl acetate copolymers, polyvinyl alcohol, and polyvionyl acetal.

Suitable examples of olefin-vinyl copolymers include ethylene-vinyl acetate, ethylene-vinyl propionate, ethylene-vinyl isobutyrate, ethylene-vinyl alcohol, ethylene-methyl acrylate, ethylene-ethyl acrylate, ethylene-ethyl methacrylate, and the like. In

general, the ethylene constitutes at least 25 percent by weight of the copolymer.

Specific examples of suitable olefin-allyl copolymers include ethylene-allyl benzene, ethylene-allyl ether, and ethylene-acrolein.

It is preferred, however, that the polymer be a polyolefin, with polyethylene being most preferred.

As far as is known at this time, the siloxane can be any siloxane as long as it has at least one silicon bonded unsaturated, substituted or unsubstituted, hydrocarbon radical substituent.

It is believed the unsaturation is necessary for mobility of the additive in the polymer. Examples of suitable unsaturated hydrocarbon radicals include alkenyl, cycloalkenyl, alkynyl, aryl, alkaryl, aralkyl, alkenylaryl, alkynylaryl, and corresponding substituted unsaturated hydrocarbon radicals. Specific examples of suitable unsaturated hydrocarbon radicals include alkenyl radicals such as the vinyl, allyl, butylene, hexylene, octylene, or decylene radicals; cycloalkenyl radicals such as the cyclopentene or cyclohexene radicals; alkynyl radicals such as the acetylene, propyne, butyne, pentyne, or decyne radicals; aryl radicals such as the phenyl, 2-naphthyl, 2-anthracyl, or biphenyl radicals; alkaryl radicals such as the 4-methylphenyl, 2,4-diethylphenyl, or 4-dodecylphenyl radicals; aralkyl radicals such as the benzyl, furfuryl, beta-phenylethyl, or 3,5-dimethylphenylethyl radicals; alkenylaryl radicals such as the phenylacetylene or diphenylacetylene radicals; and the corresponding substituted unsaturated hydrocarbon radicals such as the dichlorophenyl, nitrophenyl, or trifluorovinyl radicals.

It is preferred that the unsaturation be from aryl radicals with phenyl being optimal.

So far as is known at this time, the nature of the other substituents on the silicon are not important. However, the aromatic content has to be considered since it is believed the aromatic character gives the siloxane the anti-treeing properties. These substituents can be unsaturated, as defined above, or saturated hydrocarbon radicals.

Examples of suitable saturated hydrocarbon radicals include alkyl radicals such as the methyl, ethyl, propyl, butyl, amyl, cyclohexyl, decyl, dodecyl, and octadecyl radicals; and the corresponding substituted alkyl radicals such as the chloropropyl, 3,3,3-trifluoropropyl, cyanobutyl, mercaptopropyl, carboxyethyl, and aminoisobutyl radicals. It is preferred the other substituents on the siloxane be saturated unsubstituted hydrocarbon radicals, with alkyl being preferred and methyl being optimal.

So far as is known at this time, the siloxane can be composed of mono-, di-, and/or tri- functional units. It is preferred, however, the siloxane be composed of difunctional units. The structure of the siloxane can also be linear or cyclic. Also, so far as is known at this time, the endblocking of the linear siloxane is not critical for the purpose of this invention. If the siloxane is linear, it is preferred, however, the siloxane be either endblocked with diphenylmethyl silyl radicals, hydroxyl radicals, or trimethyl silyl radicals.

Specific examples of suitable siloxanes include
$\alpha,\omega$-dihydroxypolyphenylmethylsiloxane;
$\alpha,\omega$-diphenylmethylpolyphenylmethylsiloxane;

phenylmethyldimethylsiloxane copolymers containing 50 mole percent of each monomer unit; trimethylsiloxy endblocked phenylmethylsiloxane polymers containing approximately ten monomer units; mixed phenylmethyl, dimethyl cyclosiloxanes; 1,1,3,5,5-pentaphenyl-1,3,5-trimethyltrisiloxane; a fluid composed of 10 mole percent phenylmethyl and 90 mole percent dimethylsiloxane units; and phenylmethylcyclosiloxanes.

It is further recommended the chain length of the siloxane be in the range of 2 to 100, with 2 to 10 being optimal.

As far as is known at this time, the order of mixing the components and the specific procedure employed is not critical for the purpose of this invention. The components may be mixed on a variety of apparatus including multi-roll mills, screw mills, continuous mixers, compounding extruders, and Banbury mixers.

The treeing resistance of the plastic is affected by the amount of additive present. The amount of additive which would be used would be determined by at least three factors:

1. The level of tree resistance desired-normally this would be as high as possible.
2. The physical properties of the composition - Excessive silicone could result in a composition with insufficient integrity for the application. Excessive silicone could also adversely affect the molding process by causing slippage.

3. The economics of the composition - the more silicone that is used the more expensive the composition.

Based on these factors, it is recommended the composition contain between 1 and 10 percent of the siloxane, with 1 to 5 percent preferred.

Minor amounts of other additives may also be employed in conventional amounts to obtain the desired results. Conventional antioxidants such as the hindered phenols, polyquinolines, and the like may be employed. Other ingredients which may be included are plasticizers, dyes, pigments, heat and light stabilizers, antistatic agents, and the like.

The compositions of the invention find particular utility in high voltage transmission and distribution cables but are useful in other electrical applications where a unique combination of enhanced water treeing and electrical treeing properties are needed.

Now in order those skilled in the art may better understand how the present invention can be practiced, the following examples are given by way of illustration and not by way of limitation. All parts and percents are by weight and all viscosities are measured at 25°C unless otherwise specified.

Example 1

Sample Preparation

A 1" x 23" single screw Brabender extruder was used for compounding the polyethylene and the additive. A positive displacement metering pump was connected to the extruder ahead of the melt plug of plastic in the barrel. The dry plastic beads were fed into the barrel through the hopper at the rear of the extruder. Additive was simultaneously pumped into the barrel in the presence

of the melted plastic. The extrudate was cooled in air and chopped into small modules.

The amount of fluid in the polyethylene was then determined by silicon analysis using atomic absorption. The analysis was performed by hardening via chilling a 10 gram sample of beads. It was then ground into a powder and 300 mg. was analyzed for silicon. The nonuniformity of the compounding process and the relatively small analytical test sample size led to at least some degree of uncertainty as to the exact amount of silicone present.

Composition A was Dow Chemical XD 60007.06 polyethylene containing no additive. The Dow Chemical XD 60007.06 polyethylene was used in the formulations for testing the following additives:

Composition B was analyzed to contain 4.86 percent by weight of a phenylmethyldimethylsiloxane copolymer containing 50 mole percent of each monomer unit.

Composition C was analyzed to contain 4.80 weight percent of a trimethylsiloxy endblocked phenylmethylsiloxane polymer containing approximately ten monomer units.

Composition D was analyzed to contain 3.67 weight percent of a trimethylsiloxy endblocked phenylmethylsiloxane fluid containing approximately three monomer units.

Composition E was analyzed to contain 4.64 percent by weight of an $\alpha,\omega$-dihydroxyphenylmethylsiloxane fluid, approximately ten monomer units in length.

Composition F was analyzed to contain 2.89 weight percent of mixed phenylmethyl, dimethylcyclosiloxanes.

Composition G was analyzed to contain less than one weight percent of 1,1,3,5,5-pentaphenyl-1,3,5-trimethyltrisiloxane.

Composition M was analyzed to contain 3.42 weight percent of a 10 mole percent phenylmethyl, 90 mole percent dimethylsiloxane fluid.

Composition H was U.S.I. polyethylene resin 31006 containing no additive. The U.S.I. polyethylene resin 31006 was used in the formulations for testing the following additives:

Composition I was analyzed to contain 6.91 percent by weight phenylmethylcyclosiloxanes.

Composition J was analyzed to contain 6.95 percent by weight of 1,1,3,5,5-pentaphenyl-1,3,5-trimethylsiloxane.

Composition K was analyzed to contain approximately 5 weight percent of mineral oil.

Composition L was Union Carbide Corporation's 6202 NT tree retardant polyethylene containing approximately 2 weight percent of a silane formula having the general formula $C_6H_5\overset{H}{C}{=}N(CH_2)_3Si(OCH_2CH_3)_3$.

## Injection Molding of Samples

A single cavity injection mold was used and the molding temperatures were in the range of 375 to 500°F (191-260°C). The injection pressure ranged from 600-900 psi (0.087-0.130 N/m$^2$). The mold temperature ranged from 20 to 110°F (-7°C to 43°C) and the cycle time varied from 45 to 60 seconds.

Electrical Endurance Test

The treated plastic was injected around methylene chloride cleaned electrodes held in place by demountable electrode holders. Samples E, H, J, K, and L were injected around electrodes which were steel phonograph needles having points of 50±5 micrometers radius of curvature. Specifically, the electrode was a Dean #18 Filter Point Needle purchased from John Dean, Inc., Putnam, Connecticut. Samples B, C, D, I, and F were injected around precision needles with a 5.0 μm radius of curvature. These precision needles were obtained from the Ogura Jewel Industry Company, Inc., Tokyo Japan. Since Sample A was used in formulations for a variety of additives, it was injected around both types of electrodes and the electrode used was dependent on the comparison additive's choice of electrode. The other electrode was a standard eighth inch steel dowel pin with one end ground to a number four grind micro surface. By adjusting the length of the electrodes protruding from the holders, an electrode spacing of 0.025 inches (0.0635 cm) was established.

Following the formation of the samples by injection molding, they were x-rayed to permit identification and rejection of the ones in which the electrodes had moved during molding. Samples having approximately 0.025 ± 0.001 inch (0.0635±0.0025 cm) gap were selected for testing. The x-rays were taken by placing the sample in a Plexiglas®, trademark owned by Rohm & Haas Co., Philadelphia, PA., holder, positioning it over a Type 51 high contrast 4x5 inch (10.16x12.7 cm) Polaroid®, trademark owned by Polaroid Corporation, Cambridge, Massachussets, film and then exposing the sample and film to x-rays. The pictures were then examined under a microscope. The

molded sample itself was half an inch (1.27 cm) in diameter and three quarters of an inch (1.90 cm) long.

The selected specimens tested with the 50 micrometer needle were subjected to an electrical voltage of 30,000 volts. These samples were immersed in oil to prevent flashover. The specimens tested with the 5 micrometer needle were subjected to an electrical voltage of 8,000v. The time to failure was recorded for each sample. Generally, 30 or more samples of each composition were required for statistical evaluation. The data were evaluated by use of the computer program described by G.C. Stone and J.F. Lawless' article entitled "The Application of Weibull Statistics to Insulation Ageing Tests", IEEE Trans. Electr. Insul., EI-14, October, 1979, pp 233-239.

The data points were then graphed using a computer graphing routine. This program presented the data as individual points with a line determined by the Weibull parameters α, β, and γ which were derived from the data points drawn through them. In addition, 90% confidence intervals for the data were included.

The results are presented in Graphs I to IX. As can be seen by the graphs, the additives do affect the electrical treeing resistance of polyethylene to varying degrees. The data set denoted by "x's" are the comparative base resins with no additive. The data set denoted by "o's" are the base resins with the additives. The y axis of the graphs is the failure probability and ranges from 0.01 to 0.95. The x axis of the graphs is the failure time in seconds and ranges from 3 to 10,000.

This electrical tree test performed was similar to the method described in IEEE Conference Paper No. C73, 257-3, 1973 by E.J. McMahon and J.R. Perkins.

## Water Treeing Test

The water treeing tests were done on injection molded samples approximately 1¼ inches (3.175 cm) high by 1 inch (2.54 cm) in diameter with an inner cavity approximately 3/4 inch (1.90 cm) in diameter. The bottom of the test sample had an intentional fault with a radius of curvature of approximately 15 micrometers. This point was located approximately 0.022 inch (0.056 cm) from the outside bottom surface of the test sample. Prior to testing, the bottom of the sample was sprayed with conductive silver paint. The test was run in a rig which holds 10 samples. Each sample was charged with 2 ml of saturated aqueous sodium chloride solution containing a small amount of Triton® X-400 surfactant, stearyl benzyl dimethyl ammonium chloride manufactured by Rohm and Haas, Philadelphia, PA. A high voltage electrode was inserted in the salt solution in the test sample. The sample was placed in a small plastic cup containing a ground lead. A voltage of 10kV at 3kHz was applied to the high voltage electrode. Samples were tested in periods ranging from 3 to 400 hours. After the test, the fault was cut out of the test cell with a cork bore and placed immediately in a concentrated aqueous solution of methylene blue containing small amounts of ammonium hydroxide and Triton® X-400. The sample was microtomed and the slice containing the point of fault was placed on a glass slide, flooded with the methylene blue solution, and photomicrographed. The lengthsof the trees were measured for an entire sample set. The results of the analysis are presented graphically as a plot of the natural log average tree length versus the natural log of test time in Graphs A through J.

In all the graphs, the data for the polyethylene containing no additives are represented by "x's". There are three "x's" for each time period over which the samples were evaluated. The three "x's" are the sample mean, and the upper and lower 90 percent confidence bound for the mean. The line is the computed regression line best fitting the means. The base resin regression line extends to the tree growth axis in all cases.

The data for the polyethylene containing additives are presented as a series of "o's". There are also three "o's" for each time period over which the samples were measured. These three points are also the sample mean, and the upper and lower 90 percent confidence bounds for the means. The line is the computed regression line best fitting the means.

As can be seen by the results plotted in the graphs, the silicone additives do enhance polyethylene's resistance to water treeing to varying degrees. The water treeing test performed is similar to the procedure described in U.S. Patent Number 4,144,202.

Claims:

1. A composition comprising a major portion of a polyolefin and a minor portion of a siloxane having at least one silicon bonded unsaturated, substituted or unsubstituted, hydrocarbon radical.

2. A composition as defined in Claim 1 wherein the unsaturated hydrocarbon radical is aromatic.

3. A composition as defined in Claim 2 wherein the aromatic radical is phenyl.

4. A composition as defined in Claim 3 wherein the polyolefin is polyethylene, and the siloxane is selected from the group consisting of α,ω-dihydroxypolyphenylmethylsiloxane; α,ω-diphenylmethylpolyphenylmethylsiloxane; phenylmethyl-dimethylsiloxane copolymer containing 50 mole percent of each monomer unit; trimethylsiloxy endblocked phenylmethylsiloxane polymers containing approximately ten phenylmethyl monomer units; mixed phenylmethyl, dimethyl cyclosiloxanes; 1,1,3,5,5-pentaphenyl-1,3,5-trimethyltrisiloxane; a fluid composed of 10 mole percent phenylmethylsiloxane and 90 mole percent dimethylsiloxane; and phenylmethylcyclosiloxane.

5. An electrical cable comprising the composition as defined in Claim 1.

6. A method of stabilizing a polymer against water and electrical treeing which comprises adding a siloxane having at least one silicon bonded unsaturated, substituted or unsubstituted, hydrocarbon radical substituent.

7. A method as defined in Claim 6 wherein the unsaturated hydrocarbon radical is aromatic.

8. A method as defined in Claim 7 wherein the polymeric component is a polyolefin and the aromatic radical is phenyl.

9. A method as defined in Claim 8 wherein the polyolefin is polyethylene, and the siloxane is selected from the group consisting of α,ω-dihydroxypolyphenylmethylsiloxane; α,ω-diphenylmethylpolyphenylmethylsiloxane; phenylmethylsimethylsiloxane copolymers containing 50 mole percent of each monomer unit; trimethylsiloxy endblocked phenylmethylsiloxane polymers containing approximately ten monomer units; mixed phenylmethyl, dimethyl cyclosiloxanes; 1,1,3,5,5-pentaphenyl-1,3,5-trimethyltrisiloxane; a fluid composed of 10 mole percent phenylmethyl and 90 mole percent dimethylsiloxane fluids; and phenylmethylcyclosiloxane.

10. A method as defined in Claim 6 wherein the polymer is a part of an electrical cable.

0125020

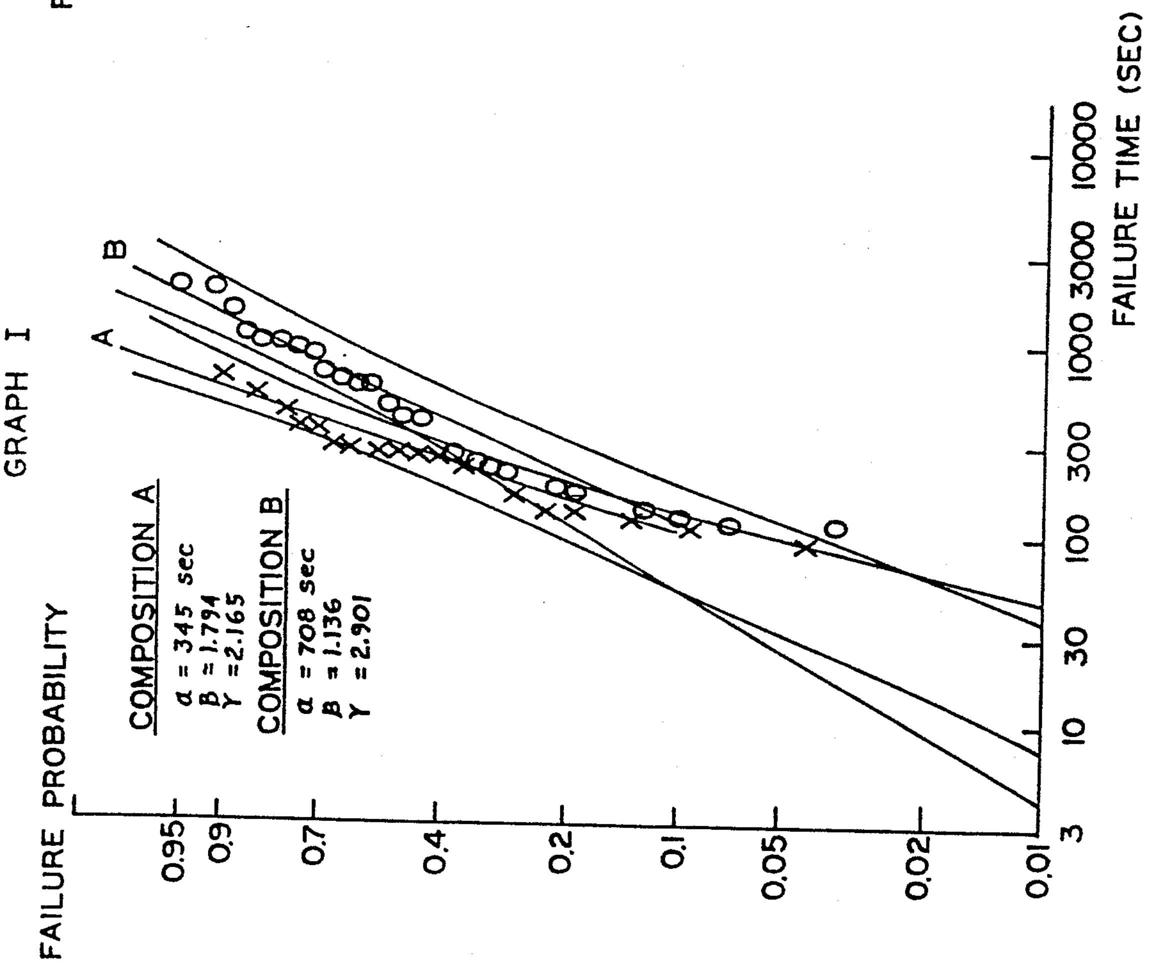
GRAPH I
FAILURE PROBABILITY
0.95
0.9
0.7
0.4
0.2
0.1
0.05
0.02
0.01
3
10
30
100
300
1000
3000
10000
FAILURE TIME (SEC)
A
B
COMPOSITION A
α = 345 sec
β = 1.794
γ = 2.165
COMPOSITION B
α = 708 sec
β = 1.136
γ = 2.901

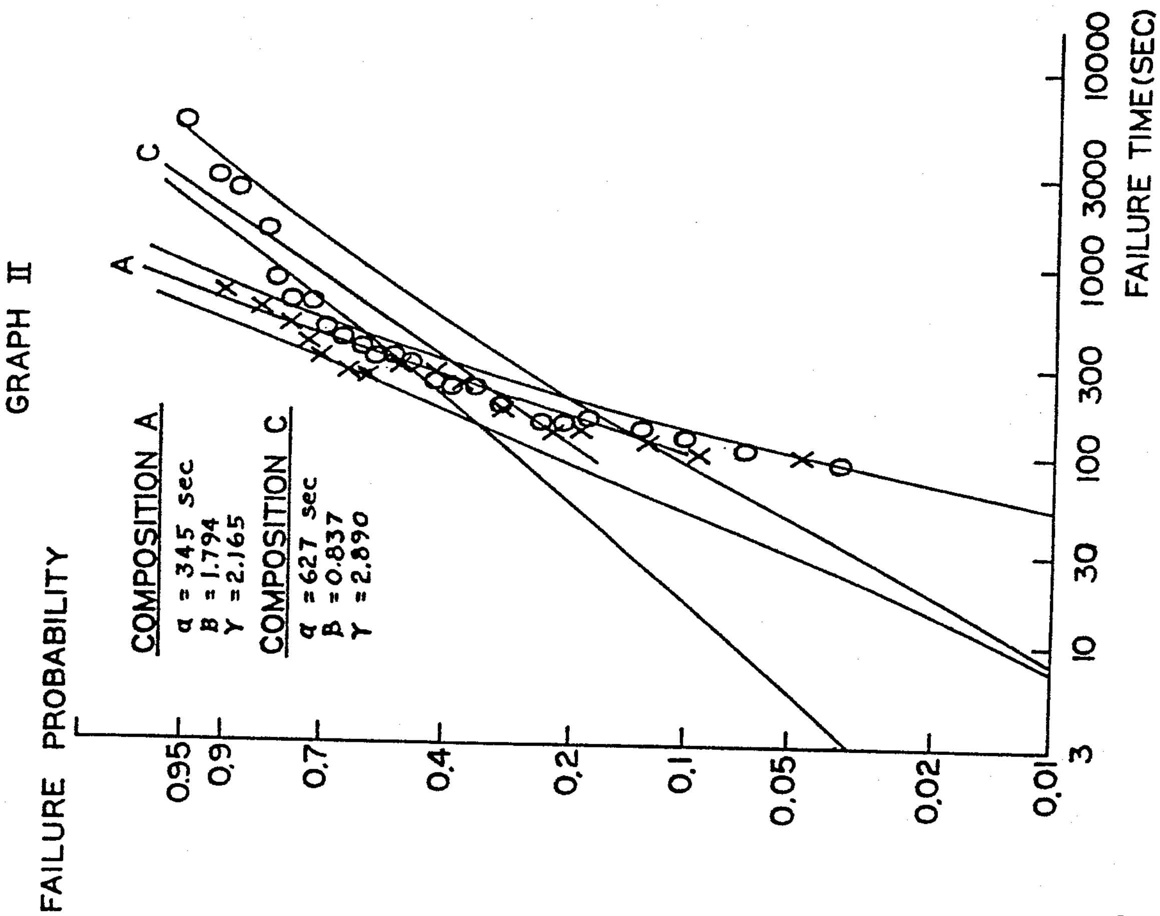
GRAPH II
FAILURE PROBABILITY
0.95
0.9
0.7
0.4
0.2
0.1
0.05
0.02
0.01
3
10
30
100
300
1000
3000
10000
FAILURE TIME (SEC)
A
C
COMPOSITION A
α = 345 sec
β = 1.794
γ = 2.165
COMPOSITION C
α = 627 sec
β = 0.837
γ = 2.890

0125020

GRAPH IV

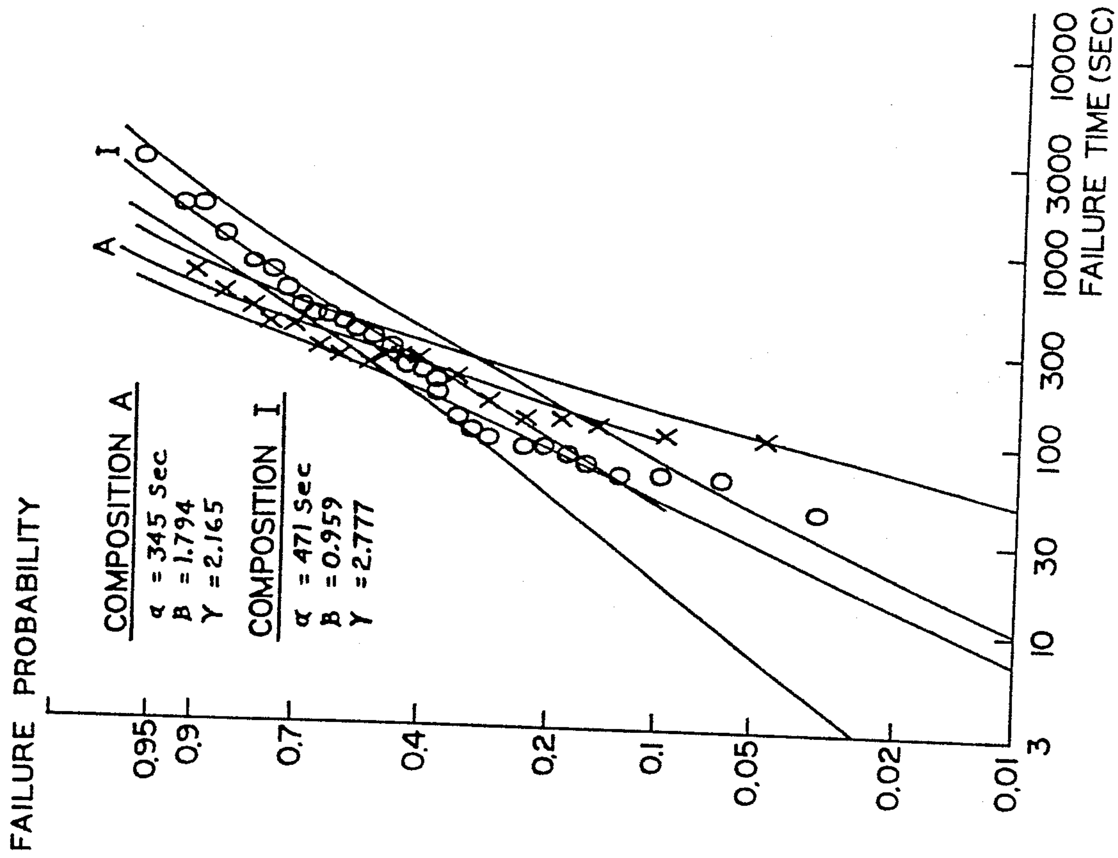


GRAPH III

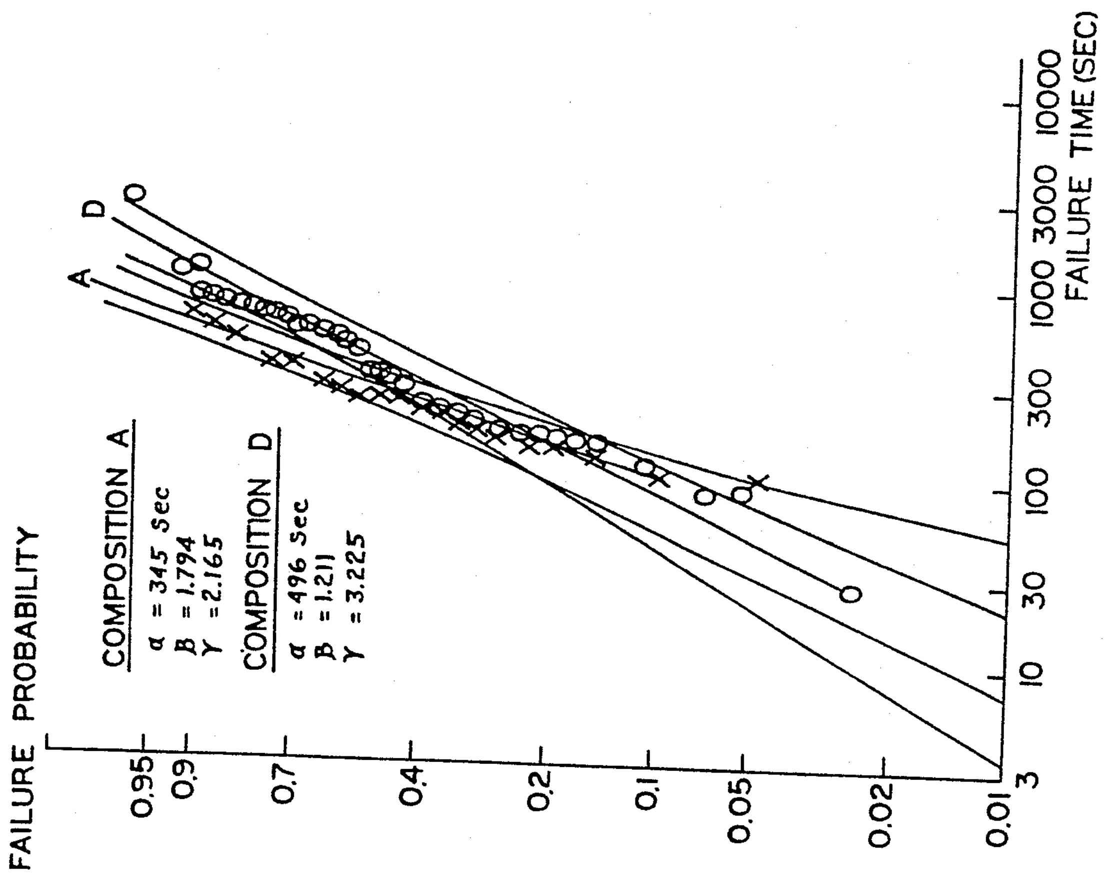

GRAPH VI

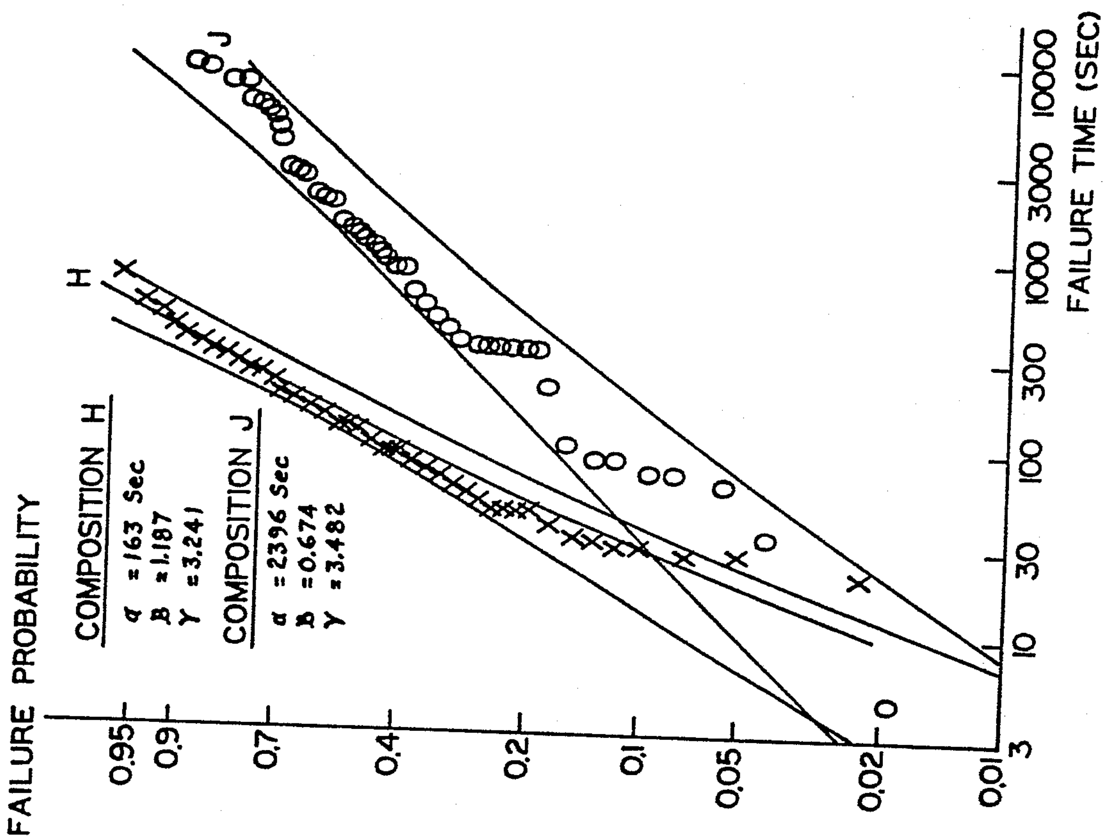


GRAPH V

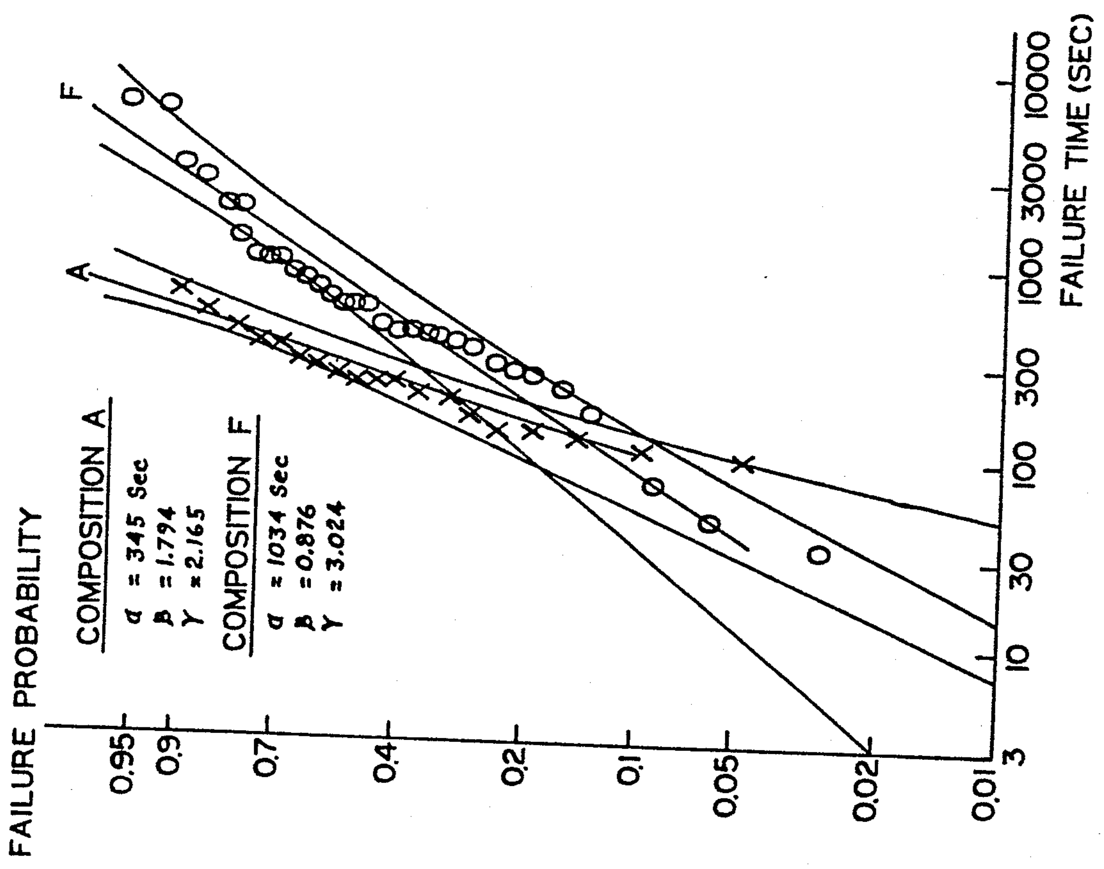

GRAPH VII

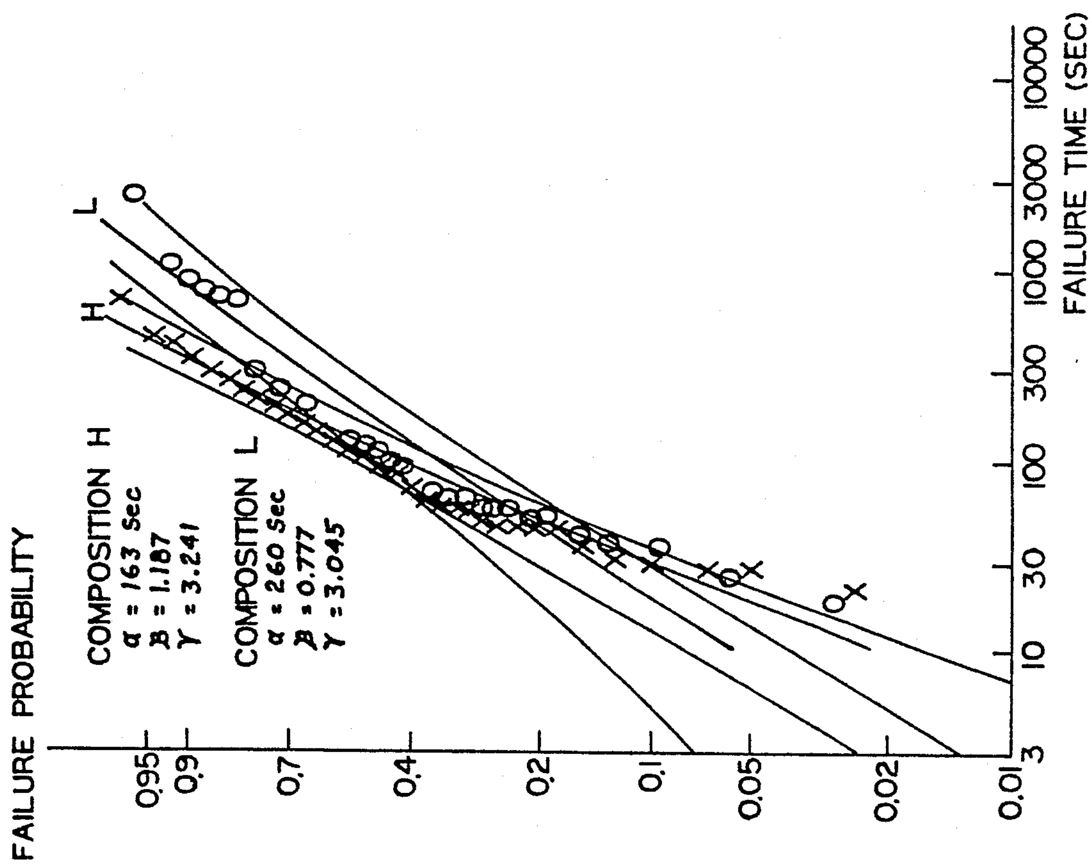


GRAPH VIII

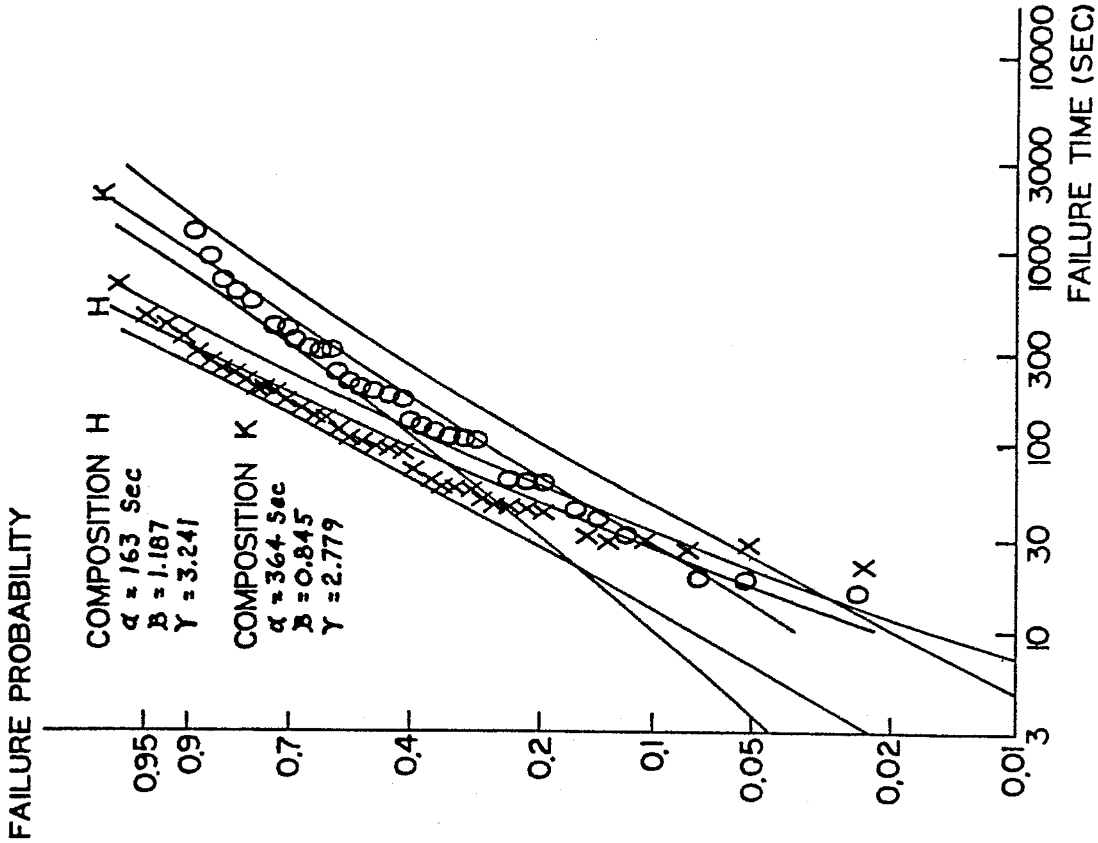

GRAPH IX

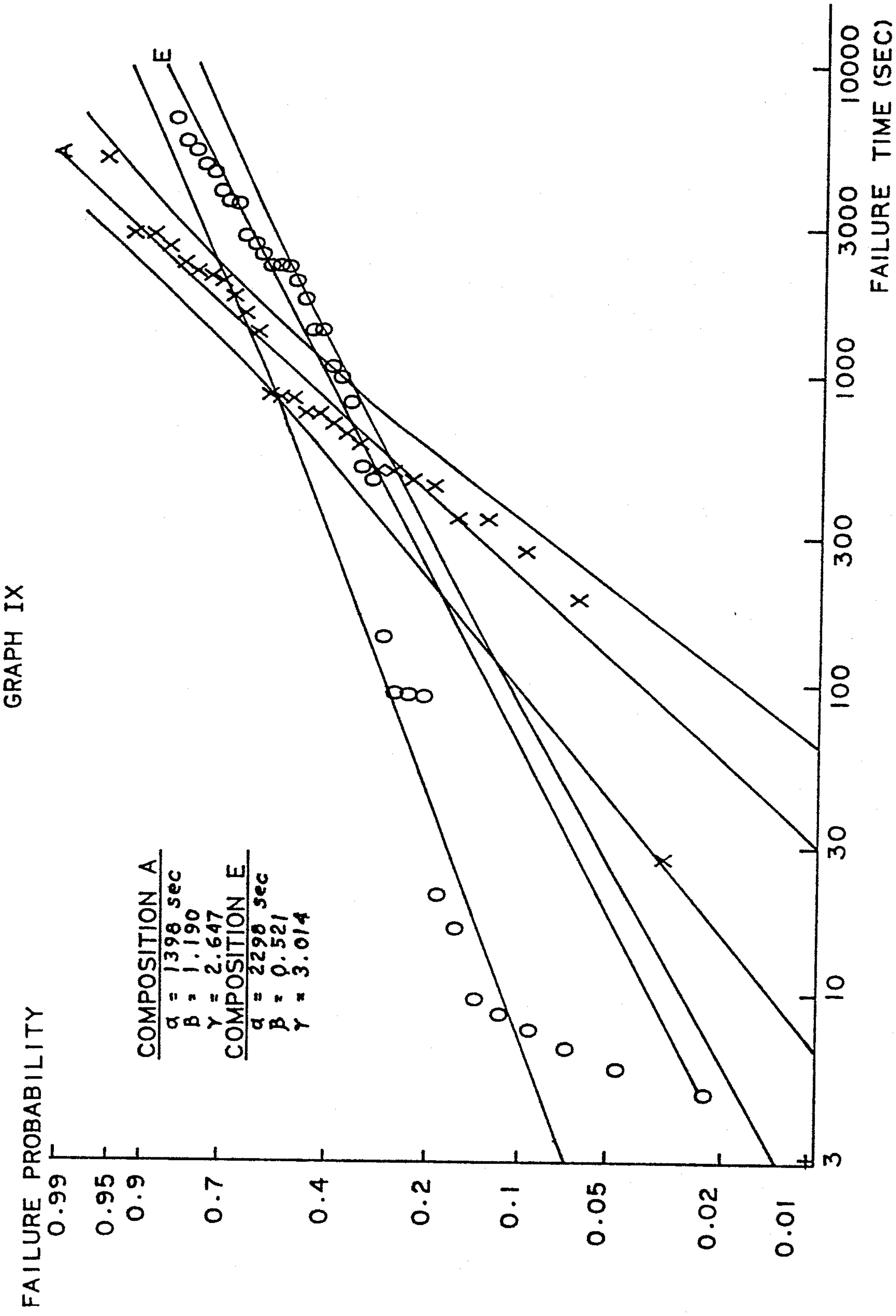
FAILURE PROBABILITY
0.99
0.95
0.9
0.7
0.4
0.2
0.1
0.05
0.02
0.01
COMPOSITION A
α = 1398 sec
β = 1.190
γ = 2.647
COMPOSITION E
α = 2298 sec
β = 0.521
γ = 3.014
A
E
3
10
30
100
300
1000
3000
10000
FAILURE TIME (SEC)

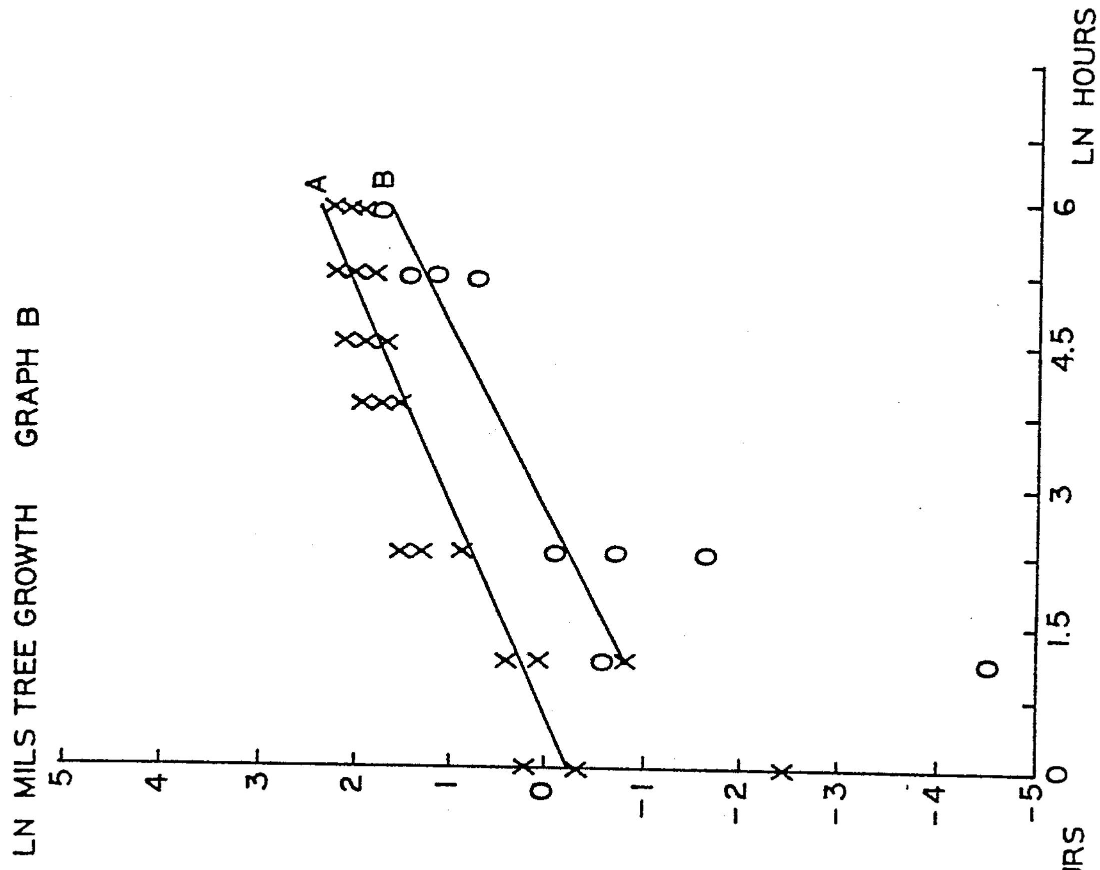
LN MILS TREE GROWTH
GRAPH B
LN HOURS
A
B
5
4
3
2
1
0
-1
-2
-3
-4
-5
0
1.5
3
4.5
6

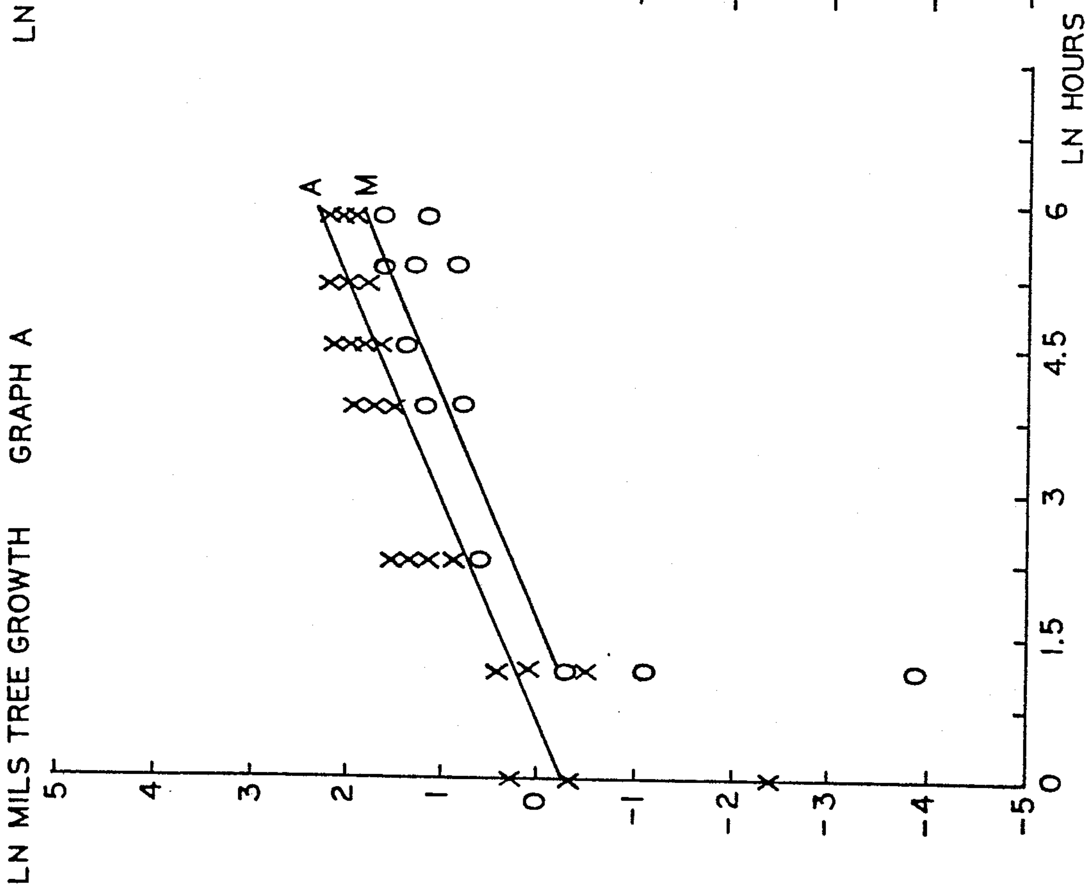
LN MILS TREE GROWTH
GRAPH A
LN HOURS
A
M
5
4
3
2
1
0
-1
-2
-3
-4
-5
0
1.5
3
4.5
6

0125020

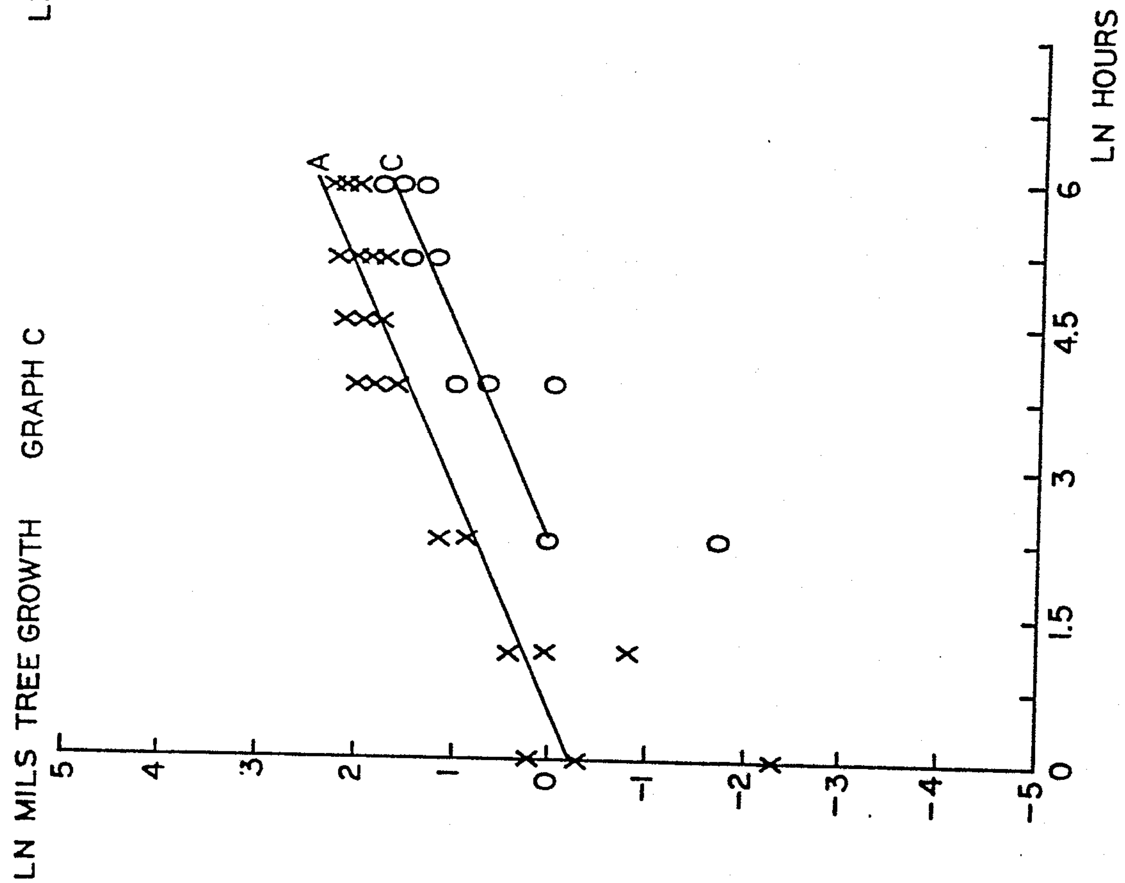
LN MILS TREE GROWTH
GRAPH C
LN HOURS
A
C
5
4
3
2
1
0
-1
-2
-3
-4
-5
0
1.5
3
4.5
6

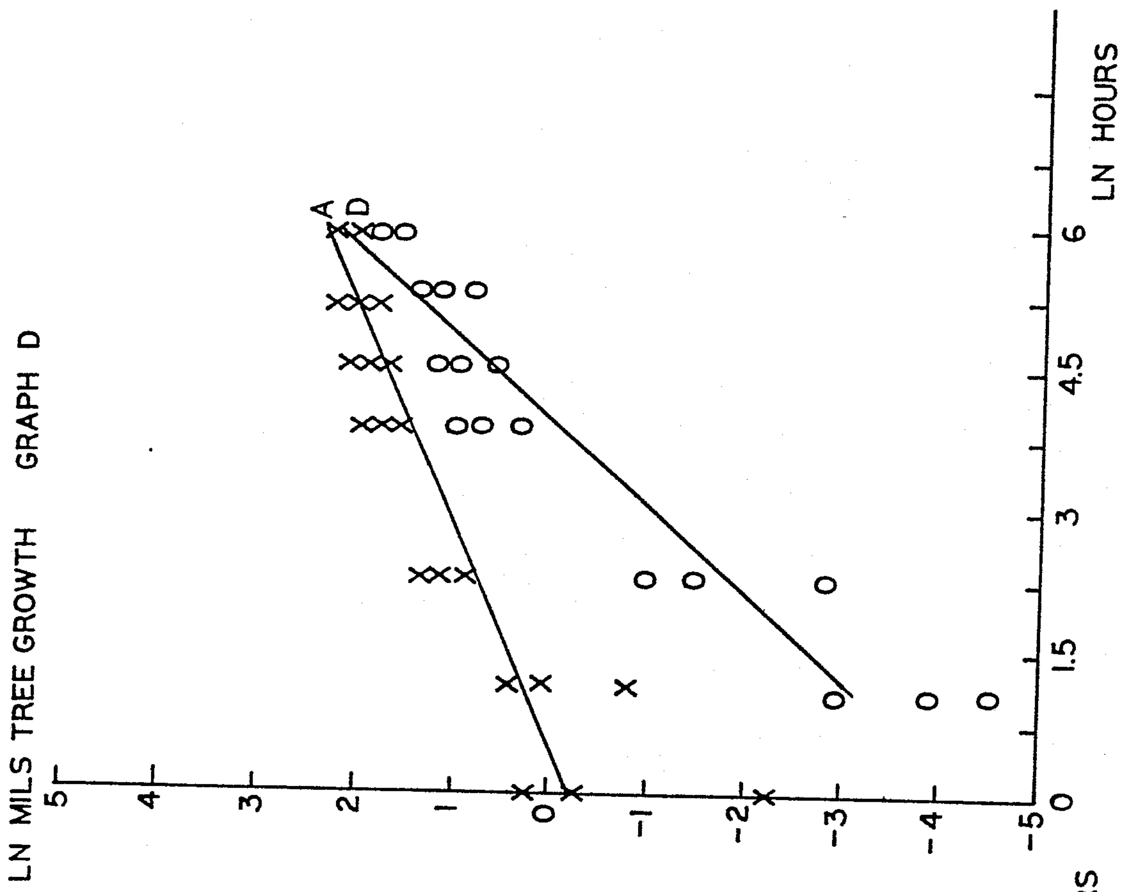
LN MILS TREE GROWTH
GRAPH D
LN HOURS
A
D
5
4
3
2
1
0
-1
-2
-3
-4
-5
0
1.5
3
4.5
6

0125020

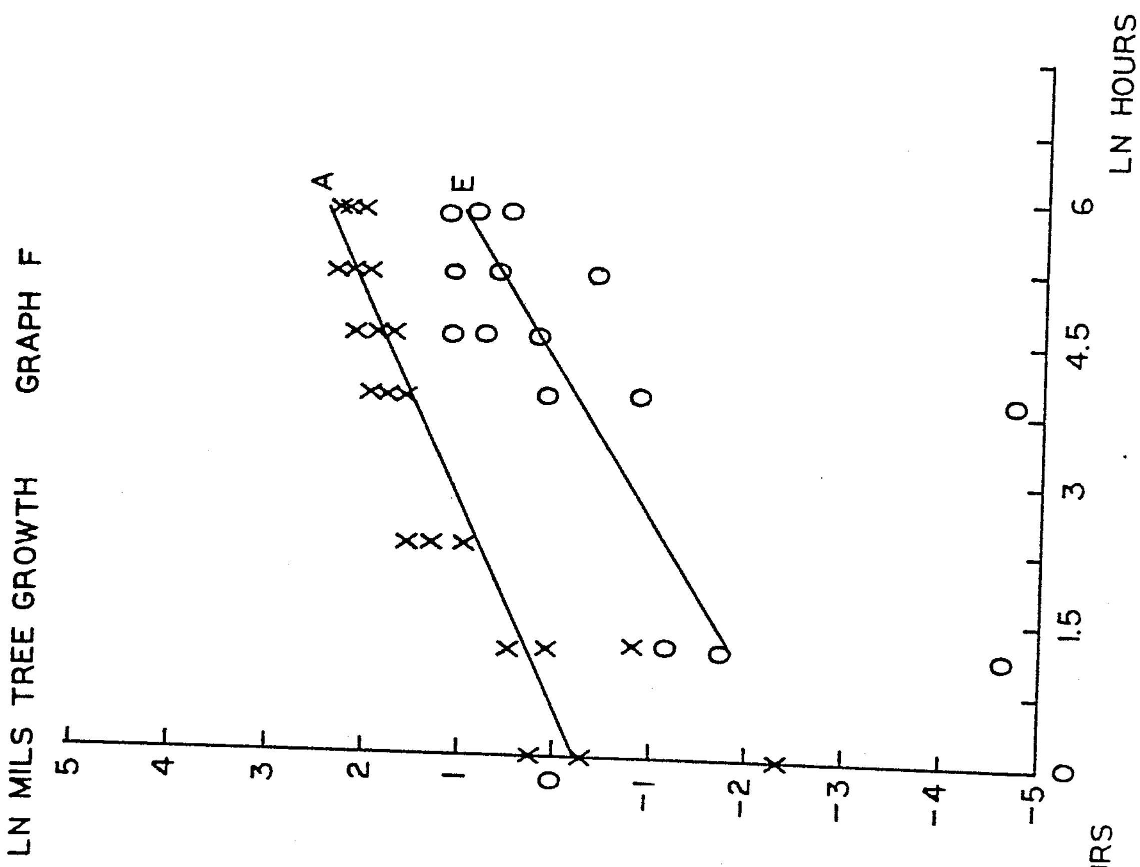
LN MILS TREE GROWTH
GRAPH F
LN HOURS
A
E
5
4
3
2
1
0
-1
-2
-3
-4
-5
0
1.5
3
4.5
6

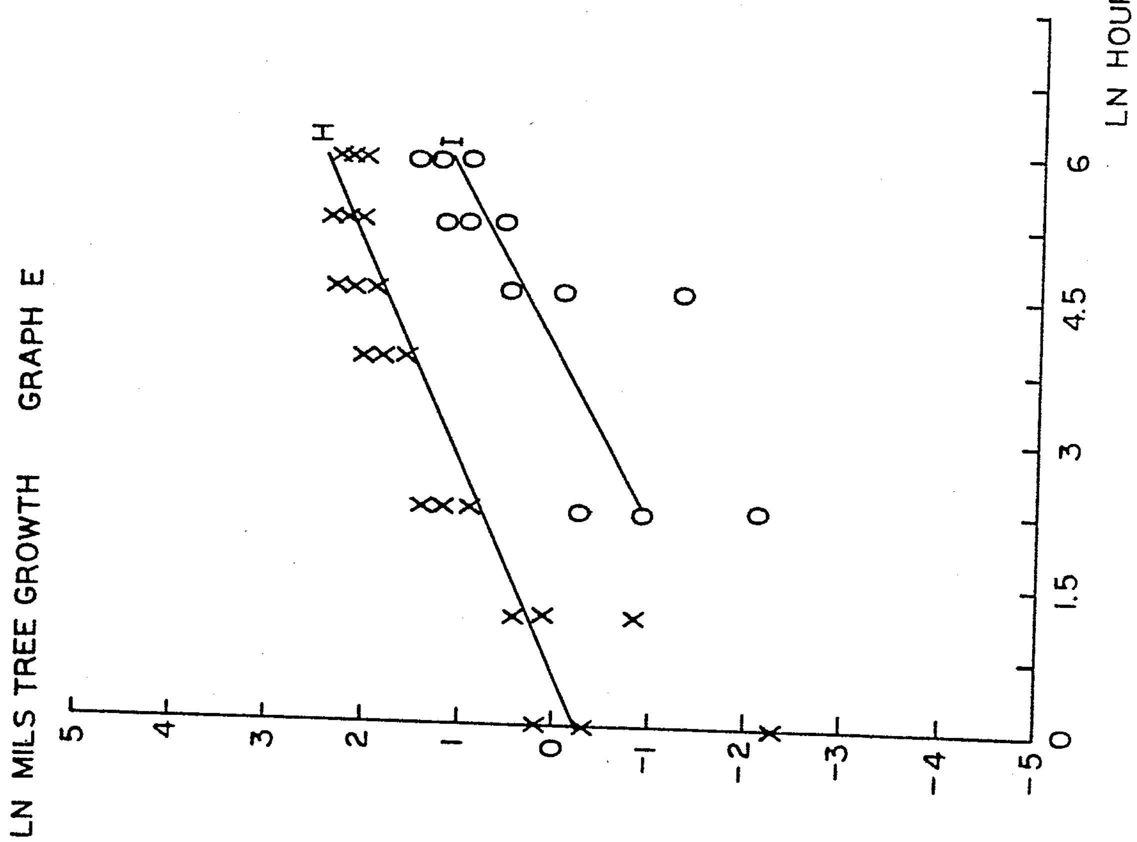
LN MILS TREE GROWTH
GRAPH E
LN HOURS
H
I
5
4
3
2
1
0
-1
-2
-3
-4
-5
0
1.5
3
4.5
6

LN MILS TREE GROWTH GRAPH G

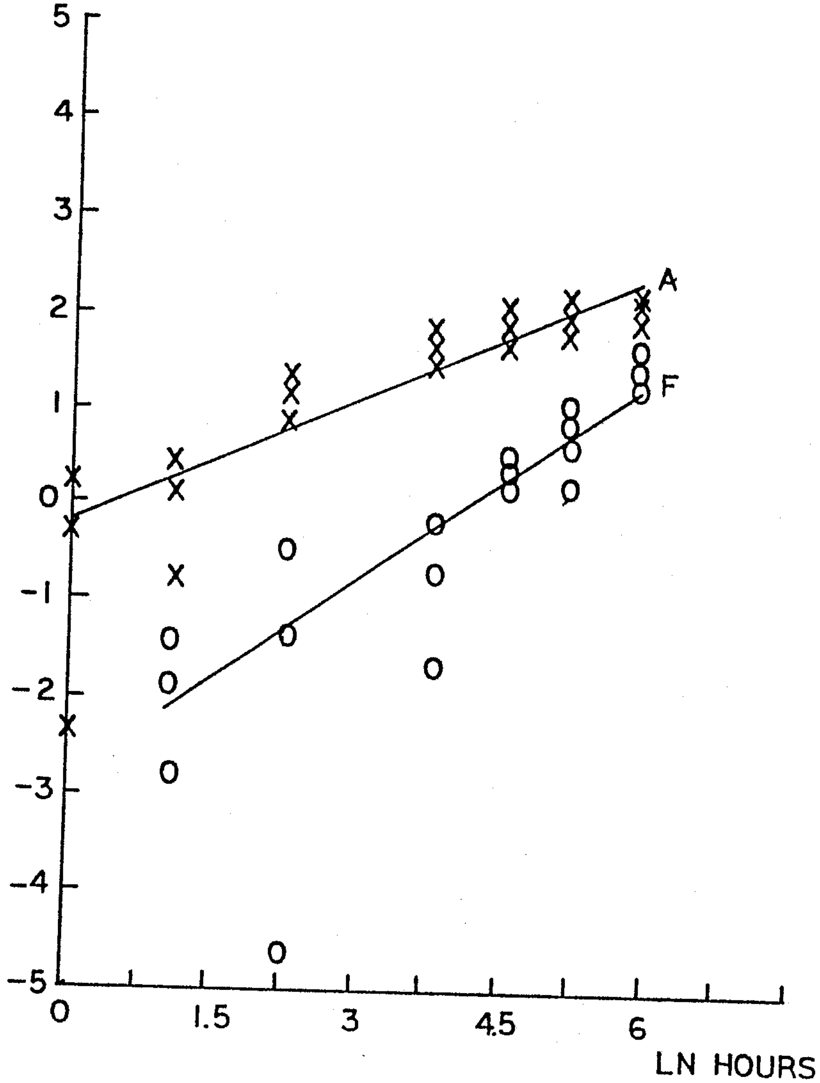


LN MILS TREE GROWTH GRAPH H

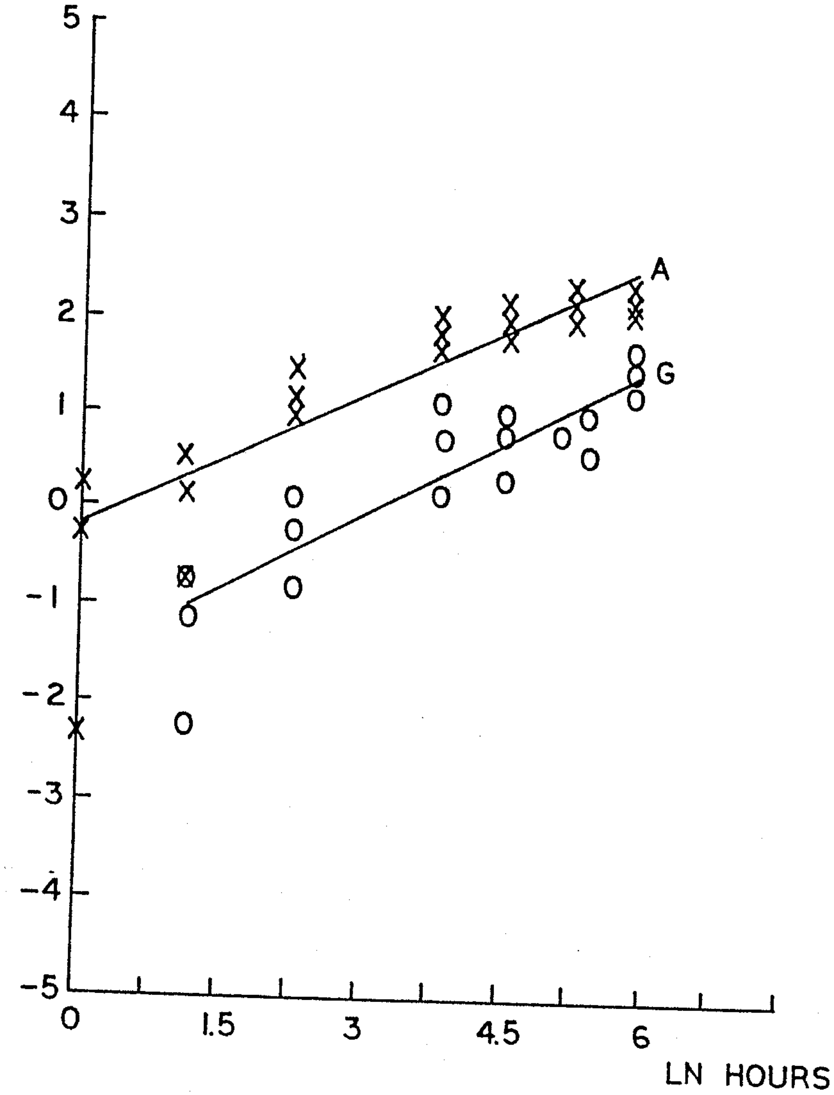

0125020

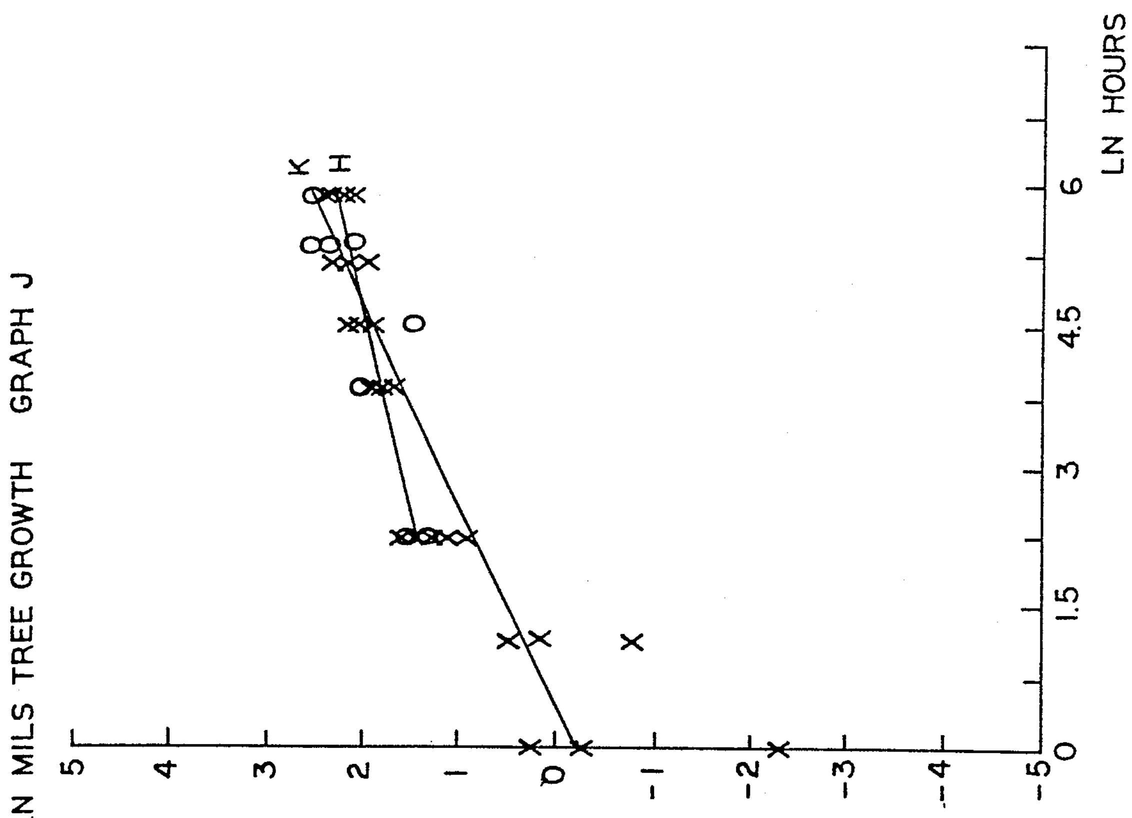
LN MILS TREE GROWTH GRAPH J
5
4
3
2
1
0
-1
-2
-3
-4
-5
0
1.5
3
4.5
6
LN HOURS
K
H

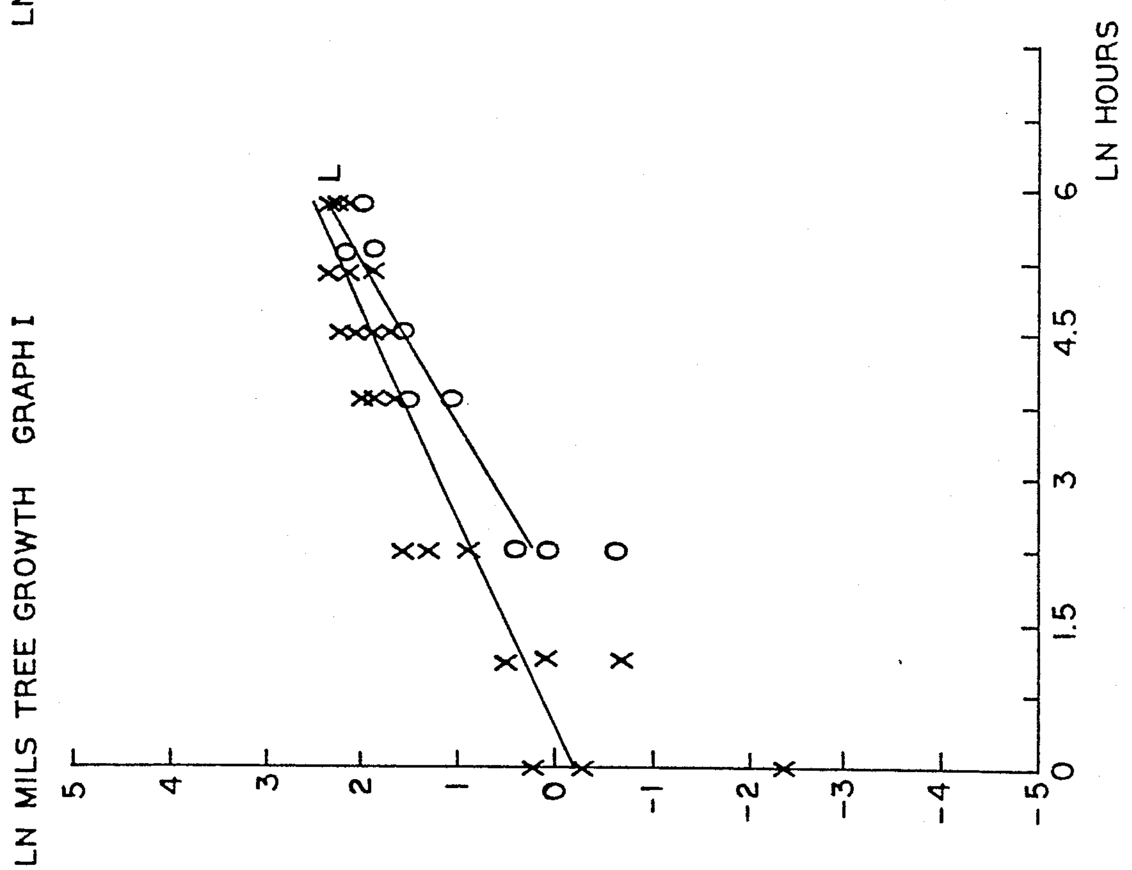
LN MILS TREE GROWTH GRAPH I
5
4
3
2
1
0
-1
-2
-3
-4
-5
0
1.5
3
4.5
6
LN HOURS
L

European Patent Office

# EUROPEAN SEARCH REPORT

0125020

Application number

EP 84 30 2340

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | GB-A-2 055 854 (NATIONAL DISTILLERS) * Abstract; claims 1-29 * --- | 1-10 | C 08 L 23/06<br>H 01 B 3/44<br>C 08 K 5/54 |
| X | US-A-3 865 897 (J.R. FALENDER) * Claims 1-9 * --- | 1-10 | |
| X,P | EP-A-0 075 956 (UNION-CARBIDE) * Claim 1 * --- | 1-3,6-8 | |
| A | CH-A- 632 288 (I.Y. PODDUBNY) * Abstract 1 * --- | 1 | |
| A | FR-A-2 245 730 (DOW CORNING) * Claim 1 * ----- | 1 | |
| | | | TECHNICAL FIELDS SEARCHED (Int. Cl. 3) |
| | | | H 01 B<br>C 08 K<br>C 08 L |

The present search report has been drawn up for all claims

| Place of search | Date of completion of the search | Examiner |
|---|---|---|
| THE HAGUE | 27-07-1984 | GOOVAERTS R.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document